# EUROPEAN PATENT APPLICATION

(11) **EP 4 518 423 A1**
(43) Date of publication of application: **05.03.2025**
(21) Application number: 22938946.5
(22) Date of filing: 26.04.2022
(51) Int. Cl.: H04W 28/24

(54) **QOS INFORMATION PROCESSING METHOD AND APPARATUS, COMMUNICATION DEVICE, AND STORAGE MEDIUM**

(71) Applicant: Beijing Xiaomi Mobile Software Co., Ltd., Beijing 100085 (CN)
(72) Inventor: YANG, Xing, Beijing 100085 (CN)
(74) Representative: Hersina, Günter
(86) International application number: PCT/CN2022/089369
(87) International publication number: WO 2023/206090

(57) **Abstract**

Provided in embodiments of the present disclosure are a QoS information processing method and apparatus, a communication device and a storage medium. The QoS information processing method is executed by a first remote UE, and comprises: sending first configuration information, wherein the first configuration information is used for a relay UE to determine QoS information of a remote UE and/or QoS information of the relay UE in a first connection.

## Description

### TECHNICAL FIELD

The disclosure relates to the field of mobile communication technologies, but not limited to mobile communication technologies, and provides an information processing method, an information processing device, a communication device and a storage medium.

### BACKGROUND

In the related technology, in order to support a direct communication between user equipment (UE) and another UE, the sidelink (SL) communication mode is introduced; UEs can communicate through an interface referred to as PC-5. Three transmission modes are supported on SL: unicast transmission, multicast transmission and broadcast transmission.

At present, there are two main transmission resource allocation modes for SL communication: one is a network-based dynamic scheduling mode, and the other is a mode in which the UE autonomously selects from the resource pool broadcast by the network. In the network dynamic scheduling mode the network reports according to the cached data of the UE and dynamically allocates the transmission resources on the SL to the UE. In the autonomous selection mode the UE randomly selects the transmission resources from a resource pool that is broadcast by the network or pre-configured. The resource pool of the dynamic scheduling mode and the resource pool of the autonomous selection mode are separate. In the dynamic scheduling mode, the base station can allocate resources uniformly; therefore, the collision of transmissions of different UEs can be avoided via a reasonable algorithm. In the autonomous scheduling mode, the UE selects resources, and when selecting resources, the UE needs to determine the range of selected transmission resources based on the packet delay budget (PDB) of the data to be sent in the SL bearer.

When SL communication is not possible between two UEs, communication can be achieved via the relay of another UE; the two UEs are called remote UEs, and the UE that provides relay function is called relay UE; the remote UE and the relay UE can communicate via SL. When two remote UEs communicate via the relay UE, the data to be sent needs to be sent from the first remote UE of the two remote UEs to the relay UE, and then sent from the relay UE to the second remote UE of the two remote UEs; at this time, when the relay UE selects the transmission resources, the relay UE may not select the suitable transmission resources, and cannot ensure the quality of service (QoS) information of the SL between the first remote UE and the second remote UE.

### SUMMARY

The embodiments of the present disclosure provide an information processing method, an information processing apparatus, a communication device and a storage medium.

According to a first aspect of the disclosure, a QoS information processing method is performed by a first remote UE and includes:
sending first configuration information, in which the first configuration information is used for a relay UE to determine remote UE quality of service (QoS) information and/or relay UE QoS information in a first connection.

According to a second aspect of the disclosure, a QoS information processing method is performed by a relay UE and includes:
receiving first configuration information;
determining remote UE QoS information and/or relay UE QoS information in a first connection based on the first configuration information.

According to a third aspect of the disclosure, a QoS information processing device is applied to first remote UE, and includes:
a first sending module, configured to send first configuration information, in which the first configuration information is used for a relay UE to determine remote UE QoS information and/or relay UE QoS information in a first connection.

According to a fourth aspect of the disclosure, a QoS information processing device is applied to relay UE, and includes:
a second receiving module, configured to receive first configuration information;
a second processing module, configured to determine remote UE QoS information and/or relay UE QoS information in a first connection based on the first configuration information.

According to a fifth aspect of the disclosure, a communication device includes:
a processor; and
a memory for storing executable instructions of the processor;
in which the processor is configured to execute the executable instructions to implement the QoS information processing method according to any embodiment of the present disclosure.

According to a sixth aspect of the disclosure, a computer storage medium is provided, the computer storage medium stores a computer executable program, and the computer executable program is executed by a processor to implement the QoS information processing method according to any embodiment of the present disclosure.

The technical solution provided in the embodiments of the present disclosure may include the following beneficial effects.

In the embodiments of the present disclosure, the first configuration information can be sent to the relay UE by the first remote UE, in which the first configuration information is used for the relay UE to determine the remote UE QoS information and/or the relay UE QoS information in the first connection. In this way, the relay UE can know the UE OoS information of the remote UE and/or the relay UE QoS information of the relay UE, to ensure the service quality of the first connection. For example, if the first configuration information indicates the relay UE QoS information, the UE can know the relay UE QoS information so that the relay UE selects suitable transmission resources when forwarding the data to be sent; in this way, the service quality of the connection between the first remote UE and the second remote UE can be ensured.

It should be understood that the above general description and the detailed description following are only illustrative and explanatory and do not limit the embodiments of the present disclosure.

### BRIEF DESCRIPTION OF THE DRAWINGS

FIG. 1 is a schematic diagram of a structure of a wireless communication system according to an exemplary embodiment.
FIG. 2 is a schematic diagram of a QoS information processing method according to an exemplary embodiment.
FIG. 3 is a schematic diagram of a QoS information processing method according to an exemplary embodiment.
FIG. 4 is a schematic diagram of a QoS information processing method according to an exemplary embodiment.
FIG. 5 is a schematic diagram of a QoS information processing method according to an exemplary embodiment.
FIG. 6 is a schematic diagram of a QoS information processing method according to an exemplary embodiment.
FIG. 7 is a schematic diagram of a QoS information processing method according to an exemplary embodiment.
FIG. 8 is a schematic diagram of a QoS information processing method according to an exemplary embodiment.
FIG. 9 is a block diagram of a QoS information processing device according to an exemplary embodiment.
FIG. 10 is a block diagram of a QoS information processing device according to an exemplary embodiment.
FIG. 11 is a block diagram of UE according to an exemplary embodiment.
FIG. 12 is a block diagram of a base station according to an exemplary embodiment.

### DETAILED DESCRIPTION

Here, exemplary embodiments will be described in detail according to the accompanying drawings. When the following description refers to the drawings, unless otherwise indicated, the same reference numbers in different drawings represent the same or similar elements. The implements described in the following exemplary embodiments do not represent all implements consistent with the embodiments of the present disclosure. Instead, they are only examples of devices and methods consistent with some aspects of the embodiments of the present disclosure as detailed in the attached claims.

The terms used in the embodiments of the present disclosure are only for the purpose of describing specific embodiments and are not intended to limit the embodiments of the present disclosure. The singular forms "a" and "the" used in the embodiments of the present disclosure and the attached claims are also intended to include the plural forms unless the context clearly indicates other meanings. It should also be understood that the term "and/or" used herein refers to any or all possible combinations including one or more associated listed items.

It should be understood that although the terms first, second, third, etc. may be used in the embodiments of the present disclosure to describe various information, these information should not be limited to these terms. These terms are only used to distinguish the same type of information from each other. For example, without departing from the scope of the embodiments of the present disclosure, the first information may also be referred to as the second information, and similarly, the second information may also be referred to as the first information. Depending on the context, the word "if" as used herein can be interpreted as "at the time of" or "when" or "in response to determination".

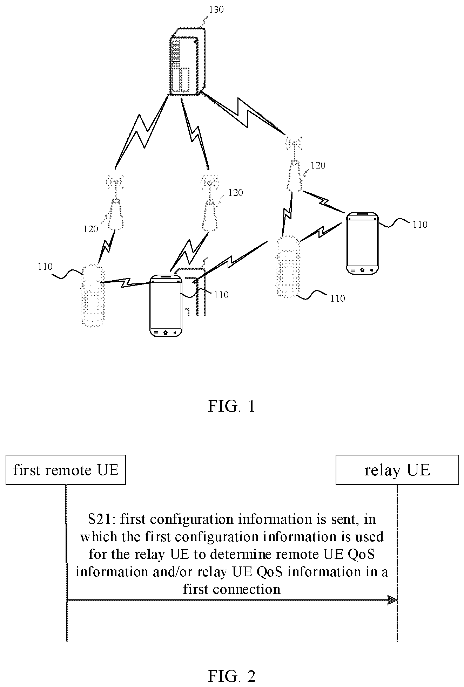

FIG. 1 shows a schematic diagram of a structure of a wireless communication system provided by an embodiment of the present disclosure. As shown in FIG. 1, the wireless communication system is a communication system based on cellular mobile communication technology, and the wireless communication system may include: a plurality of user equipment 110 and a plurality of base stations 120.

Among them, the user equipment 110 may be a device that provides voice and/or data connectivity to a user. The user equipment 110 may communicate with one or more core networks via a radio access network (RAN), and the user equipment 110 may be an Internet of Things user equipment, such as a sensor device, a mobile phone (or a "cellular" phone), and a computer with an Internet of Things user equipment, for example, a fixed, portable, pocket-sized, handheld, computer-built-in, or vehicle-mounted device. For example, a station (STA), a subscriber unit, a subscriber station, a mobile station, a mobile, a remote station, an access point, a remote terminal, an access terminal, a user terminal, a user agent, a user device, or a user equipment. Alternatively, the user equipment 110 may also be a device of an unmanned aerial vehicle. Alternatively, the user equipment 110 may also be a vehicle-mounted device, for example, a driving computer with wireless communication function, or a wireless user equipment connected to an external driving computer. Alternatively, the user equipment 110 may also be a roadside device, for example, a street lamp, a signal lamp or other roadside device with wireless communication function.

The base station 120 may be a network side device in a wireless communication system. The wireless communication system may be a 4th generation mobile communication (4G) system, also known as a long term evolution (LTE) system; or, the wireless communication system may also be a 5G system, also known as a new air interface system or a 5G NR system. Alternatively, the wireless communication system may also be a next generation system of the 5G system. The access network in the 5G system may be called a new generation radio access network (NG-RAN).

The base station 120 may be an evolved base station (eNB) used in a 4G system. Alternatively, the base station 120 may also be a base station (gNB) using a centralized distributed architecture in a 5G system. When the base station 120 adopts a centralized distributed architecture, it usually includes a centralized unit (CU) and at least two distributed units (DU). The centralized unit is provided with a protocol stack of a packet data convergence protocol (PDCP) layer, a radio link layer control protocol (RLC) layer, and a medium access control (MAC) layer; the distributed unit is provided with a physical (PHY) layer protocol stack. The specific implementation of the base station 120 is not limited in the embodiments of the present disclosure.

A wireless connection can be established between the base station 120 and the user equipment 110 through a wireless air interface. In different implementations, the wireless air interface is a wireless air interface based on the fourth generation mobile communication network technology (4G) standard; or, the wireless air interface is a wireless air interface based on the fifth generation mobile communication network technology (5G) standard, for example, the wireless air interface is a new air interface; or, the wireless air interface can also be a wireless air interface based on the next generation mobile communication network technology standard of 5G.

In some embodiments, an E2E (End to End) connection can also be established between user equipment 110. For example, vehicle to vehicle (V2V) communication, vehicle to infrastructure (V2I) communication and vehicle to pedestrian (V2P) communication in vehicle to everything (V2X) communication.

Here, the above user equipment can be considered as a terminal device in the following embodiments.

In some embodiments, the above wireless communication system can also include a network management device 130.

Several base stations 120 are respectively connected to the network management device 130. Among them, the network management device 130 can be a core network device in the wireless communication system, for example, the network management device 130 can be a mobility management entity (MME) in the evolved packet core (EPC). Alternatively, the network management device may also be other core network devices, such as a Serving GateWay (SGW), a Public Data Network GateWay (PGW), a Policy and Charging Rules Function (PCRF), or a Home Subscriber Server (HSS). The present disclosure embodiment does not limit the implementation of the network management device 130.

In order to facilitate the understanding of those skilled in the art, the embodiments of the present disclosure lists multiple implementation methods to clearly illustrate the technical solution of the embodiments of the present disclosure. Of course, those skilled in the art can understand that the multiple embodiments provided in the present disclosure can be executed separately, or can be executed together with the methods of other embodiments in the present disclosure, or can be executed separately or in combination with some methods in other related technologies; the embodiments of the present disclosure does not limit this.

As shown in FIG. 2, an embodiment of the present disclosure provides a QoS information processing method, which is executed by a first remote UE and includes the following step.

Step S21: first configuration information is sent, in which the first configuration information is used for a relay UE to determine remote UE QoS information and/or relay UE QoS information in a first connection.

In an embodiment, step S21 may be: sending the first configuration information to the relay UE.

The first remote UE, the second remote UE and the relay UE involved in the embodiments of the present disclosure may all be various mobile terminals or fixed terminals. For example, the UE may be, but is not limited to, a mobile phone, a computer, a server, a wearable device, a game control platform or a multimedia device.

Here, the relay UE is a UE that implements a relay function between the first remote UE and the second remote UE. The first remote UE and the relay UE, and the relay UE and the second remote UE can communicate through the PC5 interface.

In an embodiment, the first connection is a first sidelink (SL).

Here, the first connection is a connection between the first remote UE and the second remote UE; the first connection includes a connection between the first remote UE and the relay UE, and a connection between the relay UE and the second remote UE. Exemplarily, the first connection is the first SL; the first SL includes: the SL between the first remote UE and the relay UE, and the SL between the relay UE and the second remote UE.

In an embodiment, the SL QoS information of the first connection is the QoS information between the first remote UE and the second remote UE; and/or the remote UE QoS information is the QoS information between the first remote UE and the relay UE; and/or the relay UE QoS is the QoS information between the relay UE and the second remote UE.

Here, the QoS information can be used to indicate the quality of service (QoS); for example, the SL QoS information can be used to indicate the quality of service of the first connection; and for example, the relay QoS information can be used to indicate the quality of service of the SL between the relay UE and the second remote UE.

In an embodiment, the QoS information can be but is not limited to: Packet Delay Budget (PDB). For example, the SL QoS information includes: SL PDB; and/or, the remote UE QoS information includes: remote UE PDB; and/or, the relay UE QoS information includes: relay UE PDB.

An embodiment of the present disclosure provides a QoS information processing method, which is executed by a first remote UE and includes: sending first configuration information, in which the first configuration information is used for the relay UE to determine the remote UE PDB and/or relay UE PDB in the first connection.

Exemplarily, if the SL PDB of the first connection is 5 seconds, the remote UE PDB can be 2 seconds and the relay UE PDB can be 3 seconds; or, if the SL PDB of the first connection is 5 seconds, the remote UE PDB can be 3 seconds and the relay UE PDB can be 2 seconds; or, if the SL PDB of the first connection is 5 seconds, the remote UE PDB can be 1 second and the relay UE PDB can be 4 seconds; and so on.

It can be understood that the PDB can be used to determine the selection of transmission resources, for example, the selected transmission resources cannot be later than the PDB of the data to be sent. If the relay UE determines that the relay UE PDB is 3 seconds based on the first configuration information, the transmission resources selected by the relay UE cannot be later than the PDB of 3 seconds. Thus, in this embodiment of the present disclosure, the first remote UE sends the first configuration information to the relay UE, so that the relay UE knows the PDB for forwarding the data to be sent, thereby determining the QoS of the first connection, etc.

In other embodiments, the QoS information can be any other QoS information indicating the connection; for example, the QoS information can be the transmission reliability. Exemplarily, if the SL transmission reliability of the first connection is 90%, the transmission reliability of the remote UE can be 90% and the transmission reliability of the relay UE can be 92%; or if the SL transmission reliability of the first connection is 90%, the transmission reliability of the remote UE can be 88% and the transmission reliability of the relay UE can be 95%; and so on. For another example, the QoS information can also be any other information for determining the PDB, etc.

In some embodiments, the first configuration information is used to indicate at least one of the following:
SL QoS information of the first connection; or
at least one remote UE QoS information and/or at least one relay UE QoS information.

Embodiments of the present disclosure provide a QoS information, which is executed by a first remote UE and includes: sending first configuration information, in which the first configuration information is used to indicate SL QoS information of a first connection; in which the SL QoS information is used for the relay UE to determine the remote UE QoS information and/or the relay UE QoS information in the first connection. Thus, in this embodiment of the present disclosure, the SL QoS information of the first connection can be sent to the relay UE by the first remote UE, so that the relay UE can determine the QoS information of the relay UE suitable for the relay UE based on the SL QoS information and/or determine the suitable remote UE QoS information for the first remote UE.

In some embodiments, the first connection is the SL between the first remote UE and the second remote UE; in which different first connections correspond to different SL QoS information.

Here, the same first remote UE and different second remote UEs correspond to different first connections, and the different first connections can correspond to different SL QoS information.

Here, different first remote UEs and the same second remote UE correspond to different first connections, and the different first connections can correspond to different SL QoS information.

In other embodiments, the SL QoS information corresponding to different first connections can be the same.

An embodiment of the present disclosure provides a QoS information, which is executed by a first remote UE and includes: sending a first configuration information, in which the first configuration information is used to indicate at least one remote UE QoS information and/or at least one relay UE QoS information. In this way, the relay UE can determine the remote UE QoS information of the first remote UE and/or the relay UE QoS information of the relay UE based on the first configuration information directly sent by the first remote UE.

Exemplarily, the first configuration information is used to indicate one of the following:
at least one remote UE QoS information;
at least one relay UE QoS information;
at least one remote UE QoS information and relay UE QoS information corresponding to the at least one remote UE QoS information.

In this way, in this embodiment of the present disclosure, the first remote UE can send one or more remote UE QoS to the relay UE separately, or send one or more relay UE QoS to the relay UE separately; or send the combined remote UE QoS information and relay UE QoS to the relay UE. In some embodiments of the present disclosure, more is two or more. In this way, the relay UE can at least know the remote UE QoS information or at least know the relay UE QoS information, and can also ensure the QoS of the first connection to a certain extent.

An embodiment of the present disclosure provides a QoS information processing method, which is executed by a first remote UE and includes: sending first configuration information, in which the first configuration information is used to indicate the SL QoS information of the first connection and at least one remote UE QoS information. In this way, the relay UE can determine the relay UE QoS information of the relay UE based on the SL QoS information and the remote UE QoS information.

An embodiment of the present disclosure provides a QoS information processing method, which is executed by a first remote UE and includes: sending first configuration information, in which the first configuration information is used to indicate the SL QoS information of the first connection and at least one relay UE QoS information. In this way, it is beneficial for the relay UE to determine the UE QoS information suitable for the relay UE based on the at least one relay UE QoS information; and it is also possible to determine the remote UE QoS of the first remote UE based on the SL QoS information and the relay UE QoS information.

In this embodiment of the present disclosure, the first configuration information can be sent to the relay UE by the first remote UE, in which the first configuration information is used for the relay UE to determine the remote UE QoS information and/or the relay UE QoS information in the first connection. In this way, the relay UE can know the UE OoS information of the remote UE and/or the relay UE QoS information of the relay UE, to ensure the service quality of the first connection. For example, if the first configuration information indicates the relay UE QoS information, the UE can know the relay UE QoS information so that the relay UE selects suitable transmission resources when forwarding the data to be sent; in this way, the service quality of the connection between the first remote UE and the second remote UE can be ensured.

In some embodiments, the sending the first configuration information in step S21 includes at least one of the following:
sending the first configuration information based on a SL Radio Resource Control (RRC) message;
sending the first configuration information based on a SL Media Access Control Control Element (MAC CE) signaling.

An embodiment of the present disclosure provides a QoS information processing method, which is executed by the first remote UE and includes: sending the first configuration information based on the SL RRC message. In this way, the one SL RRC message can realize the two functions of sending the RRC message and configuring the QoS information, so that the sending of the signaling and the utilization rate of the SL RRC message can be reduced.

An embodiment of the present disclosure provides a QoS information processing method, which is executed by a first remote UE and includes: sending first configuration information based on SL MAC CE signaling. In this way, one SL MAC CE signaling can realize the two functions of sending MAC CE signaling and configuring QoS information, so that the sending of signaling and the utilization rate of SL MAC CE signaling can be reduced.

It should be noted that those skilled in the art can understand that the method provided by the embodiments of the present disclosure can be executed alone or together with some methods in the embodiments of the present disclosure or some methods in related technologies.

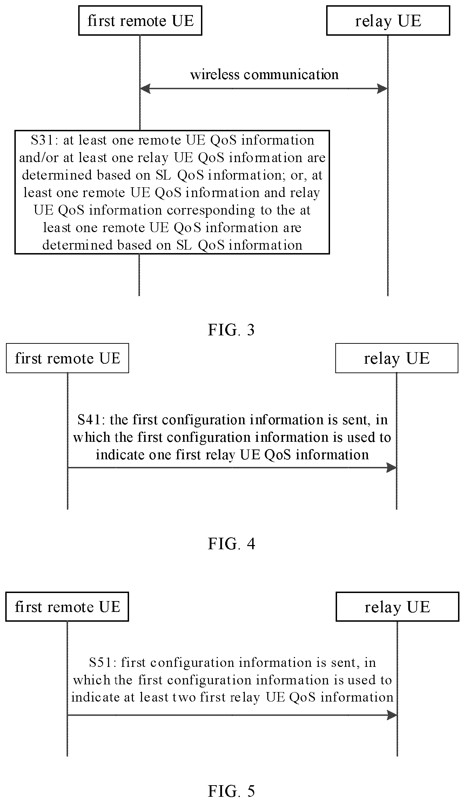

As shown in FIG. 3, an embodiment of the present disclosure provides a QoS information processing method, which is executed by a first remote UE and includes the following step.

Step S31: at least one remote UE QoS information and/or at least one relay UE QoS information are determined based on SL QoS information; or, at least one remote UE QoS information and relay UE QoS information corresponding to the at least one remote UE QoS information are determined based on SL QoS information.

In some embodiments of the present disclosure, the SL QoS information may be the QoS information in the above-mentioned embodiment; the remote UE QoS information and the relay UE QoS information may be respectively the remote UE QoS information and the relay UE QoS information in step S21.

Exemplarily, the first remote UE may determine at least one remote UE QoS information based on the SL QoS information. For example, when the QoS information is PDB, if the SL PDB is 5 seconds, it can be determined that the remote UE PDB may be 1 second, 2 seconds, 3 seconds or 4 seconds, etc. In this way, the first remote UE may determine the remote UE QoS information suitable for the first remote UE based on the SL QoS information, so as to at least ensure the service quality between the first remote and the relay UE.

Exemplarily, the first remote UE may determine at least one relay UE QoS information based on the SL QoS information. For example, when the QoS information is PDB, if the SL PDB is 5 seconds, it can be determined that the relay UE PDB may be 1 second, 2 seconds, 3 seconds or 4 seconds, etc. In this way, the first remote UE can determine the suitable relay UE QoS information configured for the relay UE based on the SL QoS information, so as to at least ensure the service quality between the relay UE and the second remote UE.

Exemplarily, the first remote UE can also determine at least one set of remote UE QoS information and relay UE QoS information based on the SL QoS information. Here, the set of remote UE QoS information and relay UE QoS information are a remote UE QoS information and a relay UE QoS information corresponding to the remote UE QoS information. Exemplarily, if the QoS information is PDB, if the SL PDB is 5 seconds; then the at least one set of remote UE QoS information and relay UE QoS information determined are that: remote UE PDB is 1 second and relay UE PDB is 4 seconds, remote UE PDB is 2 seconds and relay UE PDB is 3 seconds, remote UE PDB is 3 seconds and relay UE PDB is 2 seconds, and remote UE PDB is 4 seconds and relay UE PDB is 1 second, etc. In this way, the first remote UE can determine at least one set of UE QoS information suitable for the first remote UE and the QoS information of the relay UE based on the SL QoS information.

In some embodiments, the first configuration information is used to indicate one first relay UE QoS information in the relay UE QoS information.

As shown in FIG. 4, an embodiment of the present disclosure provides a QoS information processing method, which is executed by the first remote UE and includes the following step.

Step S41: the first configuration information is sent, in which the first configuration information is used to indicate one first relay UE QoS information.

In this way, the embodiments of the present disclosure can help the relay UE to determine whether to use the first relay UE QoS information as the QoS information for determining the transmission resources.

Embodiments of the present disclosure provide a QoS information processing method, which is executed by the first remote UE and includes: in response to receiving the first confirmation information, determining the transmission resources based on the first remote UE QoS information corresponding to the first relay UE QoS information; in which the first confirmation information is used to indicate that the relay UE determines the transmission resources based on the first relay UE QoS information.

In an embodiment, the receiving the first confirmation information can be: receiving the first confirmation information sent by the relay UE.

Here, if the relay UE determines the transmission resources based on the first relay UE QoS information, the first confirmation information is sent to the first remote UE. When the first remote UE receives the first confirmation information, it knows that the relay UE will determine the transmission resources based on the first relay UE QoS information, and then determines that the remote UE QoS of the first remote UE is the first remote UE QoS information corresponding to the first relay UE QoS information; in this way, the service quality of the SL between the first remote UE and the second remote UE can be guaranteed. Exemplarily, if the SL QoS information is a 5-second PDB, if the first relay UE QoS information is a 2-second PDB; then the first remote UE QoS information corresponding to the first relay UE QoS information is a 3-second PDB.

In some embodiments, determining the transmission resources includes but is not limited to at least one of the following:
selecting the transmission resources;
adjusting a transmission power; or
determining a priority of the transmission resources.

An embodiment of the present disclosure provides a QoS information processing method, which is executed by a first remote UE, and includes at least one of the following steps.

In response to receiving a first confirmation message, it is determined to select a transmission resources based on the first remote UE QoS information corresponding to the first relay UE QoS information.

In response to receiving the first confirmation message, it is determined to adjust the transmission power based on the first remote UE QoS information corresponding to the first relay UE QoS information.

In response to receiving the first confirmation message, it is determined to determine the priority of the transmission resources based on the first remote UE QoS information corresponding to the first relay UE QoS information.

In an embodiment, the selecting the transmission resources may be that: the PDB included in the QoS information is not later than the selected transmission resources. For example, if the relay UE PDB is 5 seconds, the time slot resource in the selected transmission resources are the time slot resource before the 5 seconds.

In an embodiment, the adjusting the transmission power may be: reducing the transmission power or increasing the transmission power, so that the transmission reliability is not lower than the transmission reliability indicated by the QsS information.

Thus, in this embodiment of the present disclosure, if the first remote UE receives the first determination information, the transmission resources can be determined based on the first remote UE QoS, so as to ensure the service quality between the first remote UE and the relay UE; and/or the relay UE can determine the transmission resources based on the first relay UE QoS, so as to ensure the service quality between the relay UE and the second remote UE. In this way, the service quality of the first connection can be ensured.

Determining the transmission resources involved in the embodiments of the present disclosure can be but not limited to at least one of the following: selecting the transmission resources; adjusting the transmission power; and determining the priority of the transmission resources. For example, the first relay UE and the relay UE determining the transmission resources can respectively but not limited to at least one of the following: selecting the transmission resources; adjusting the transmission power; and determining the priority of the transmission resources.

An embodiment of the present disclosure provides a QoS information processing method, which is executed by the first remote UE and includes: in response to receiving the first rejection information, determining that the first connection fails; in which the first rejection information is used to indicate that the transmission resources of the relay UE cannot meet the first relay UE QoS information.

In an embodiment, the receiving the first rejection information can be: receiving the first rejection information sent by the relay UE.

Here, determining that the first connection fails may be: determining that the wireless connection of the SL between the first remote UE and the second remote UE fails.

Here, the transmission resources of the relay UE cannot meet the first relay UE QoS information, which may be: the relay UE determines that the transmission resources of the relay UE cannot meet the first relay UE QoS information according to the SL channel situation.

Here, the transmission resources of the relay UE cannot meet the first relay UE QoS information, which may be: the transmission resources that the relay UE can select are all earlier than the PDB included in the first relay UE QoS information; and/or, the transmission reliability determined by the transmission resources that the relay UE can select is lower than the transmission reliability indicated by the first relay UE QoS information. For example, the earliest transmission resource that the relay UE can select is 4 seconds, and the PDB included in the first relay UE QoS information is 3 seconds; then the transmission resources of the relay UE cannot meet the first relay UE QoS information. For another example, the transmission reliability determined by the transmission resources that the relay UE can select is up to 90%, while the transmission reliability indicated by the first relay UE QoS information is 95%; then the transmission resources of the relay UE cannot meet the first relay UE QoS information.

Thus, in this embodiment of the present disclosure, when the first remote UE receives the first rejection information, it can be determined that the relay UE sends the transmission resources determined based on the first relay UE QoS information, and then determines that the first connection fails. In this way, the failure rate of the first remote UE sending the to-be-sent data based on the first remote UE QoS information corresponding to the first relay UE QoS information can be reduced.

It should be noted that those skilled in the art can understand that the method provided in the embodiments of the present disclosure can be executed alone or together with some methods in the embodiments of the present disclosure or some methods in the related technology.

In some embodiments, the first configuration information is used to indicate at least two first relay UE QoS information in the relay UE QoS information; in which, the at least two first relay UE QoS are used for the relay UE to determine a first relay UE QoS as the second relay UE QoS for determining the transmission resources.

As shown in FIG. 5, an embodiment of the present disclosure provides a QoS information processing method, which is executed by a first remote UE and includes the following step.

Step S51: first configuration information is sent, in which the first configuration information is used to indicate at least two first relay UE QoS information.

The at least two first relay UE QoS are used for the relay UE to determine one first relay UE QoS as the second relay UE QoS for determining the transmission resources.

Here, the second relay UE QoS information is at least two first relay UE QoS information.

In an embodiment, at least two first relay UE QoS information are used for the relay UE to select any one of the first relay UE QoS information from at least two first relay UE QoS information as the second relay UE QoS information.

In another embodiment, at least two first relay UE QoS information are used for the relay UE to select one first relay UE QoS information that meets a predetermined condition from at least two first relay UE QoS information as the second relay UE QoS information. Here, the predetermined condition may be any achievable condition; for example, the predetermined condition may be: the highest transmission reliability, the largest or smallest PDB, etc.

Thus, in this embodiment of the present disclosure, if the first remote UE sends at least two first relay UE QoS information to the relay UE, the relay UE can determine a suitable first relay UE QoS information based on the at least two first UE QoS information as the second relay UE QoS for the relay UE to determine the transmission resources.

Embodiments of the present disclosure provide a QoS information processing method, which is executed by the first remote UE and includes: in response to receiving second confirmation information, determining the transmission resources based on the second remote UE QoS information corresponding to the second relay UE QoS information; in which the second confirmation information is used to indicate that the relay UE determines the transmission resources based on the second relay UE QoS information.

In an embodiment, the receiving the second confirmation information may be: receiving the second confirmation information sent by the relay UE.

An embodiment of the present disclosure provides a QoS information processing method, which is executed by a first remote UE, and includes at least one of the following steps.

In response to receiving a second confirmation message, it is determined to select a transmission resource based on the second remote UE QoS information corresponding to the second relay UE QoS information.

In response to receiving the second confirmation message, it is determined to adjust the sending power based on the second remote UE QoS information corresponding to the second relay UE QoS information.

In response to receiving the second confirmation message, it is determined to determine the priority of the transmission resources based on the second remote UE QoS information corresponding to the second relay UE QoS information.

Thus, in this embodiment of the present disclosure, if the first remote UE receives the second determination information, it can determine the transmission resources based on the second remote UE QoS, so as to ensure the service quality between the first remote UE and the relay UE; and/or so that the relay UE can determine the transmission resources based on the second relay UE QoS, so as to ensure the service quality between the relay UE and the second remote UE. In this way, the service quality of the first connection can be ensured.

An embodiment of the present disclosure provides a QoS information processing method, which is executed by the first remote UE and includes: in response to receiving the second rejection information, determining that the first connection fails; in which the second rejection information is used to indicate that the transmission resources of the relay UE cannot meet any of the first relay UE QoS information.

In an embodiment, the receiving the second rejection information can be: receiving the second rejection information sent by the relay UE.

Here, determining that the first connection fails can be: determining that the wireless connection of the SL between the first remote UE and the second remote UE fails.

Here, the transmission resources of the relay UE cannot meet any of the first relay UE QoS information can be: the relay UE determines that the transmission resources of the relay UE cannot meet any one of the first relay UE QoS information according to the SL channel situation.

Thus, in this embodiment of the present disclosure, when the first remote UE receives the second rejection information, it can be determined that the relay UE sends the transmission resources determined based on the second relay UE QoS information, and then the first connection is determined to have failed. In this way, the failure rate of the first remote UE sending the to-be-sent data based on the second remote UE QoS information corresponding to the second relay UE QoS information can be reduced.

It should be noted that those skilled in the art can understand that the method provided in the embodiments of the present disclosure can be executed alone or together with some methods in the embodiments of the present disclosure or some methods in related technologies.

In some embodiments, the first configuration information is used to indicate the SL QoS information of the first connection.

The method includes: receiving the second configuration information, in which the second configuration information carries third relay UE QoS information; determining the third remote UE QoS information corresponding to the third UE QoS information based on the third relay UE QoS information.

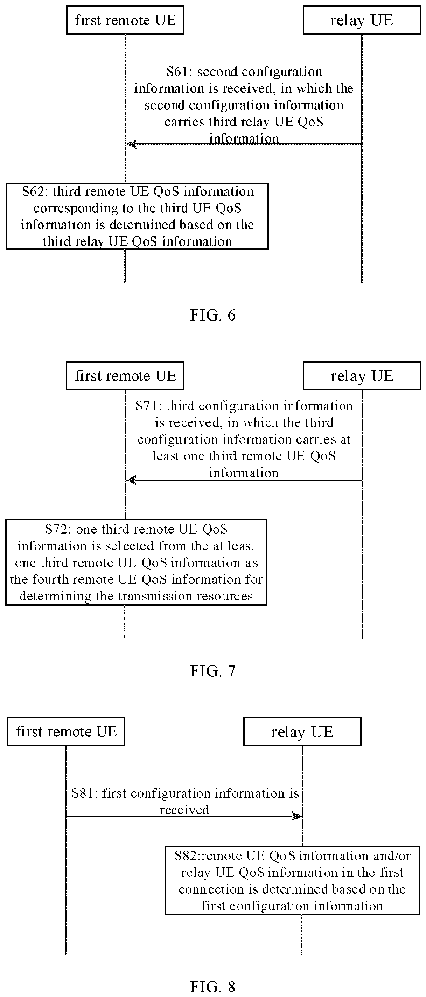

As shown in FIG. 6, an embodiment of the present disclosure provides a QoS information processing method, which is executed by a first remote UE and includes the following steps.

Step S61: second configuration information is received, in which the second configuration information carries third relay UE QoS information;

Step S62: third remote UE QoS information corresponding to the third UE QoS information is determined based on the third relay UE QoS information.

In an embodiment, the second configuration information carries one third relay UE QoS.

Exemplarily, the first remote UE sends first configuration information, in which the first configuration information is used to indicate SL QoS information of the first connection; for example, the SL QoS information of the first connection is a 5-second SL PDB. Here, the relay UE can determine one third relay UE QoS information based on the SL PDB of the relay UE; for example, the third relay UE QoS information is a 2-second remote UE PDB. If the first remote UE receives the second configuration information carrying the third relay UE QoS information, the third remote UE QoS information corresponding to the third relay UE QoS information can be determined. For example, if the first remote UE receives a remote UE PDB of 2 seconds, the relay UE PDB can be determined to be 3 seconds based on the 2-second remote UE PDB.

Thus, in this embodiment of the present disclosure, if the first remote UE receives the second configuration information, the second configuration information carries the third relay UE QoS information recommended by the relay UE; thus, the first remote UE can determine the third remote UE QoS information corresponding to the third relay UE QoS information as the remote QoS information for determining the transmission resources based on the third relay UE QoS information recommended by the relay UE. In this way, the service quality between the first remote UE and the second remote UE can be ensured.

An embodiment of the present disclosure provides a QoS information processing method, which is executed by the first remote UE and includes: sending third confirmation information, in which the third confirmation information is used to indicate that the first remote UE determines the transmission resources based on the third remote UE QoS information.

In an embodiment, the sending the third confirmation information includes: sending the third confirmation information to the relay UE.

Thus, in this embodiment of the present disclosure, the first remote UE may send the third confirmation information to the relay UE to inform the relay UE that the first remote UE will use the third remote UE QoS information to determine the transmission resources and/or the relay UE may use the third relay UE QoS information to determine the transmission resources.

An embodiment of the present disclosure provides a QoS information processing method, which is executed by the first remote UE and includes: sending a third rejection message, in which the third rejection message is used to indicate that the first remote UE does not determine the transmission resources based on the third remote UE QoS information corresponding to the third relay UE QoS information.

In this embodiment of the present disclosure, if the first remote UE receives the second configuration information, and the second configuration information carries the third relay UE QoS recommended by the relay UE, the first remote UE may also accurately inform the relay UE via the third rejection message that the first remote UE does not determine the third remote UE QoS information corresponding to the third relay UE QoS information based on the suggestion of the relay UE to determine the transmission resources.

In an embodiment, the second configuration information carries at least two third relay UE QoS information.

Embodiments of the present disclosure provide a QoS information processing method, which is executed by a first remote UE and includes: selecting one third relay UE OoS information from at least two third relay UE QoS information as the fifth relay UE QoS information; and determining fifth remote UE QoS information corresponding to the fifth relay UE QoS information.

Thus, in this embodiment of the present disclosure, when the first remote UE receives information indicating multiple third relay UE QoS information, it can also select a suitable third relay UE QoS information as the UE QoS information for the relay UE to determine the transmission resources and/or determine the fifth remote UE QoS information corresponding to the third relay UE QoS information as the remote UE QoS information for the first remote UE to determine the transmission resources.

In some embodiments, the first configuration information is used to indicate the SL QoS information of the first connection;

The method includes: receiving the third configuration information, in which the third configuration information carries at least one third remote UE QoS information; and selecting one third remote UE QoS information from at least one third remote UE QoS information as the fourth remote UE QoS information for determining the transmission resources.

As shown in FIG. 7, an embodiment of the present disclosure provides a QoS information processing method, which is executed by a first remote UE, and includes the following steps.

Step S71: third configuration information is received, in which the third configuration information carries at least one third remote UE QoS information;

Step S72: one third remote UE QoS information is selected from at least one third remote UE QoS information as the fourth remote UE QoS information for determining the transmission resources.

In an embodiment, the receiving the third configuration information includes: receiving the third configuration information sent by the relay UE.

In some embodiments, step S72 includes: selecting any one of third remote UE QoS information from at least one third remote UE QoS as the fourth remote UE QoS information for determining the transmission resources; or, selecting one third remote UE QoS information that meets a predetermined condition from at least one third remote UE QoS as the fourth remote UE QoS information for determining the transmission resources.

The predetermined condition may be any achievable condition; for example, the predetermined condition may be: the highest transmission reliability, the largest or smallest PDB, etc.

Thus, in this embodiment of the present disclosure, if the first remote UE receives the third configuration information, the third configuration information carries at least one third remote UE QoS information of the first remote UE recommended by the relay UE; thus, the first remote UE can determine the fourth remote UE QoS information suitable for the first remote UE to determine the transmission resources from at least one third remote UE QoS information.

An embodiment of the present disclosure provides a QoS information processing method, which is executed by the first remote UE and includes:
determining the fourth relay UE QoS information corresponding to the fourth remote UE QoS information;
sending the fourth confirmation information, in which the fourth confirmation information is used to indicate the relay UE to determine the transmission resources based on the fourth relay UE QoS information.

In an embodiment, sending the fourth confirmation information may be: sending the fourth confirmation information to the relay UE.

Thus, in this embodiment of the present disclosure, the first remote UE can determine the fourth relay UE QoS information corresponding to the fourth remote UE QoS information, and send the fourth confirmation information indicating the fourth relay UE QoS information to the relay UE, so as to indicate the relay UE to determine the transmission resources based on the fourth relay UE QoS information. In this way, it can be ensured that both the first remote UE and the relay UE select suitable QoS information to determine the transmission resources, thereby ensuring the service quality between the first remote UE and the second remote UE.

The transmission of information between the first remote UE and the relay UE involved in the present disclosure can be achieved via RRC messages or MAC CE signaling. For example, the first configuration information sent by the first remote UE, the second configuration information and/or the third configuration information sent by the relay UE, etc. can all be sent via RRC messages or MAC CE signaling; for example, the third confirmation information and/or the fourth confirmation information sent by the first remote end, or the first confirmation information and/or the second confirmation information and/or the first rejection information and/or the second rejection information sent by the relay UE can all be sent via RRC messages or MAC CE signaling.

It should be noted that those skilled in the art can understand that the method provided in the embodiments of the present disclosure can be executed alone or together with some methods in the embodiments of the present disclosure or some methods in related technologies.

The following QoS information processing method is performed by a relay UE, which is similar to the description of the QoS information processing method performed by the first remote UE; and for the technical details not disclosed in the embodiment of the QoS information processing method performed by the relay UE, the description of the example of the QoS information processing method performed by the first remote UE can be referred, and no detailed description is given here.

As shown in FIG. 8, an embodiment of the present disclosure provides a QoS information processing method, which is performed by the relay UE and includes the following steps.

Step S81: first configuration information is received.

Step S82: the remote UE QoS information and/or relay UE QoS information in the first connection is determined based on the first configuration information.

In some embodiments of the present disclosure, the first configuration information may be the first configuration information in step S21; the remote UE QoS information and the relay UE QoS information may be the remote UE QoS information and the relay UE QoS information in step S21, respectively.

Exemplarily, the first configuration information is used to indicate at least one of the following:
SL QoS information of the first connection;
at least one remote UE QoS information and/or at least one relay UE QoS information.

Exemplarily, the first connection is a SL between a first remote UE and a second remote UE; in which different first connections correspond to different SL QoS information.

Exemplarily, the QoS information includes: PDB.

In an embodiment, step S81 includes: receiving first configuration information sent by a first remote UE.

In some embodiments, step S81 includes at least one of the following:
receiving first configuration information sent based on an SL RRC message;
receiving first configuration information sent based on an SL MAC CE signaling.

An embodiment of the present disclosure provides a QoS information processing method, which is executed by a relay UE, and includes at least one of the following:
receiving first configuration information sent based on an SL RRC message;
receiving first configuration information sent based on an SL MAC CE signaling.

Embodiments of the present disclosure provide a QoS information processing method, which is executed by a relay UE, and includes: in response to the first configuration information indicating one first relay UE QoS information in the relay UE QoS information, sending a first confirmation information; in which the first confirmation information is used to indicate that the relay UE determines the transmission resources based on the first relay UE QoS information.

In an embodiment, the sending the first confirmation information includes: sending the first confirmation information to the first remote UE.

An embodiment of the present disclosure provides a QoS information processing method, which is executed by a relay UE, and includes: in response to a first configuration information indicating one first relay UE QoS information in the relay UE QoS information, sending first rejection information; in which the first rejection information is used to indicate that the transmission resources of the relay UE cannot meet the first relay UE QoS information.

In an embodiment, the sending the first rejection information includes: sending the first rejection information to a first remote UE.

An embodiment of the present disclosure provides a QoS information processing method, which is executed by a relay UE, and includes: determining whether the transmission resources of the relay UE meet the first relay UE QoS information based on the channel situation of the first connection.

In some embodiments, the sending the first rejection information includes: sending the first rejection information in response to the transmission resources of the relay UE not meeting the first relay UE QoS information.

In some embodiments, the sending the first confirmation information includes: sending the first confirmation information in response to the transmission resources of the relay UE meeting the first relay UE QoS information.

An embodiment of the present disclosure provides a QoS information processing method, which is executed by a relay UE, and includes: determining that the first connection fails in response to sending the first rejection information.

Embodiments of the present disclosure provide a QoS information processing method, which is executed by a relay UE, and includes: in response to at least two first relay UE QoS information in the relay UE QoS information indicated by the first configuration information, determining one first relay UE QoS information from the at least two first relay UE QoS information as the second relay UE QoS information for determining the transmission resources.

Here, the relay UE can select any one of the first relay UE QoS information from the at least two first relay UE QoS information as the second relay UE QoS information.

Here, the relay UE can select one first relay UE QoS information that meets a predetermined condition from at least two first relay UE QoS information as the second relay UE QoS information. Here, the predetermined condition can be any achievable condition; for example, the predetermined condition can be: the highest transmission reliability, the largest or smallest PDB, etc.

An embodiment of the present disclosure provides a QoS information processing method, which is executed by the relay UE, and includes: sending second confirmation information, in which the second confirmation information is used to indicate that the relay UE determines the transmission resources based on the second relay UE QoS.

In an embodiment, the sending the second confirmation information includes: sending the second confirmation information to the first remote UE.

An embodiment of the present disclosure provides a QoS information processing method, which is executed by the relay UE, and includes: in response to the first configuration information indicating at least two first relay UE QoS information in the relay UE QoS information, sending second rejection information, in which the second rejection information is used to indicate that the transmission resources of the relay UE cannot meet any one of the first relay UE QoS information.

An embodiment of the present disclosure provides a QoS information processing method, which is executed by the relay UE, and includes: in response to sending the second rejection information, determining that the first connection fails.

An embodiment of the present disclosure provides a QoS information processing method, which is executed by a relay UE, and includes: determining whether the transmission resources of the relay UE meet any one of first relay UE QoS information based on the channel situation of the first connection.

In some embodiments, the sending the second rejection information includes: sending the second rejection information in response to the transmission resources of the relay UE not meeting any one of first relay UE QoS information or not meeting the second relay UE QoS information.

In some embodiments, the sending the second confirmation information includes: sending the second confirmation information in response to the transmission resources of the relay UE meeting the second relay UE QoS information.

In some embodiments, step S82 includes one of the following:
determining at least one third remote UE QoS information and/or at least one third relay UE QoS information based on the SL QoS information carried in the first configuration information;
determining at least one third remote UE QoS information and the third relay UE QoS information corresponding to the third remote UE QoS information based on the SL QoS information carried in the first configuration information.

An embodiment of the present disclosure provides a QoS information processing method, which is executed by a relay UE, and includes one of the following:
determining at least one third remote UE QoS information and/or at least one third relay UE QoS information based on the SL QoS information carried in the first configuration information;
determining at least one third remote UE QoS information and the third relay UE QoS information corresponding to the third remote UE QoS information based on the SL QoS information carried in the first configuration information.

Embodiments of the present disclosure provide a QoS information processing method, which is executed by a relay UE, and includes: determining, by the relay UE, the third remote UE QoS information and/or the third relay UE QoS information based on the SL QoS and the available transmission resources.

An embodiment of the present disclosure provides a QoS information processing method, which is executed by a relay UE, and includes: sending the second configuration information, in which the second configuration information carries the third relay UE QoS information.

Embodiments of the present disclosure provide a QoS information processing method, which is executed by a relay UE, and includes: receiving third confirmation information, in which the third confirmation information is used to indicate that the first remote UE determines the transmission resources based on the third remote UE QoS information; in which the third remote UE QoS information is determined by the first remote UE based on the third relay UE QoS information.

An embodiment of the present disclosure provides a QoS information processing method, which is executed by a relay UE, and includes: sending third configuration information, in which the third configuration information carries at least one third remote UE QoS information.

An embodiment of the present disclosure provides a QoS information processing method, which is executed by a relay UE, and includes: receiving fourth confirmation information, in which the fourth confirmation information indicates that the relay UE determines the transmission resources based on the fourth relay UE QoS information; in which the fourth relay QoS information is determined by the first remote UE based on the fourth remote UE QoS information; the fourth remote UE QoS information is determined by the first remote UE by selecting one third remote UE QoS information from at least one third remote UE QoS information.

In some embodiments, the fourth confirmation information is used to indicate that the first remote UE determines the transmission resources based on the fourth remote UE QoS information.

In some embodiments, determining the transmission resources involved in the embodiments of the present disclosure includes at least one of the following:
selecting the transmission resources;
adjusting a transmission power; or
determining a priority of transmission resources.

For the above implementation methods, specific reference can be made to the description on the base station side, which will not be repeated here.

It should be noted that those skilled in the art can understand that the method provided in the embodiments of the present disclosure can be executed alone or together with some methods in the embodiments of the present disclosure or some methods in related technologies.

In order to further explain any embodiment of the present disclosure, a specific embodiment is provided below.

Embodiments of the present disclosure provide a QoS information processing method, which is executed by a communication device, and the communication device includes a first remote UE or a relay UE, and the method includes the following steps.

Step S901: The first remote UE sends first configuration information to the relay UE, in which the first configuration information is used to indicate the SL QoS information of the first connection.

In an embodiment, the SL QoS information includes: SL PDB.

In an embodiment, the first connection includes: a first SL; in which the first SL includes a SL between a first remote UE and a second remote UE; the SL between the first remote UE and the second remote UE includes: a SL between the first remote UE and a relay UE, and a SL between the relay UE and the second remote UE.

In an embodiment, different first connections correspond to different SL QoS information.

In an embodiment, the first remote UE sends the first configuration information based on an RRC message, or the first remote UE sends the first configuration information based on a MAC CE.

Step S902: The first remote UE determines at least one remote UE QoS information and/or at least one relay UE QoS information based on the SL QoS information.

In an embodiment, the remote UE QoS information is the QoS information between the first remote UE and the relay UE; and/or the relay UE QoS information is the QoS information between the relay UE and the second remote UE.

In an embodiment, the first remote UE determines at least one set of remote UE QoS information and relay UE QoS information based on the SL QoS information; in which the set of remote UE QoS information and relay UE QoS information includes: one remote UE QoS information and relay UE QoS information corresponding to the one remote UE QoS information.

Step S903: The first configuration information sent by the first remote UE to the relay UE is used to indicate one first relay UE QoS information in the relay UE QoS information.

Step S904: In response to receiving the first configuration information for indicating the first relay UE QoS, the relay UE sends first confirmation information to the first remote UE; in which the first confirmation information is used to indicate that the relay UE determines the transmission resources based on the first relay UE QoS information.

Step S905: In response to receiving the first confirmation information, the first remote UE determines the transmission resources based on the first remote UE QoS information corresponding to the first relay UE QoS information.

Step S906: In response to receiving the first configuration information for indicating the first relay UE QoS, the relay UE sends first rejection information to the first remote UE; in which the first rejection information is used to indicate that the transmission resources of the relay UE cannot meet the first relay UE QoS information.

In an embodiment, the relay UE determines that the transmission resources of the relay UE cannot meet the first relay UE QoS information based on the channel condition of the first connection.

Step S907: After sending the first rejection information, the relay UE determines that the first connection fails.

Step S908: In response to receiving the first rejection information, the first remote UE determines that the first connection fails.

Step S909: The first configuration information sent by the first remote UE to the relay UE is used to indicate at least two first relay UE QoS information in the relay UE QoS information.

Step S910: in response to receiving the first configuration information for indicating at least two first relay UE QoS, the relay UE determines one first relay UE QoS information as the second relay UE QoS information based on at least two first relay UE QoS; and sends the second confirmation information, in which the first confirmation information is used to indicate that the relay UE determines the transmission resources based on the second relay UE QoS information.

Step S911: In response to receiving the second confirmation information, the first remote UE determines the second remote UE QoS information corresponding to the second relay UE QoS information based on the second relay UE QoS information indicated in the second information.

Here, the second remote UE QoS information is used for the first remote UE to determine the transmission resources.

Step S912: In response to receiving the first configuration information for indicating at least two first relay UE QoS, the relay UE sends second rejection information to the first remote UE, in which the second rejection information is used to indicate that the transmission resources of the relay UE cannot meet any one of the first relay UE QoS information.

In an embodiment, the relay UE determines that the transmission resources of the relay UE cannot meet any one of the first relay UE QoS information based on the channel condition of the first connection.

Step S913: After sending the second rejection information, the relay UE determines that the first connection fails.

Step S914: In response to receiving the second rejection information, the first remote UE determines that the first connection fails.

Step S915: The relay UE determines at least one third remote UE QoS information and/or at least one third relay UE QoS information based on the SL QoS information.

In an embodiment, the third remote UE QoS information is the QoS information between the first remote UE and the relay UE; and/or the third relay UE QoS information is the QoS information between the relay UE and the second remote UE.

In an embodiment, the first remote UE determines at least one set of third remote UE QoS information and third relay UE QoS information based on the SL QoS information; in which the set of third remote UE QoS information and third relay UE QoS information includes: one third remote UE QoS information and third relay UE QoS information corresponding to the one third remote UE QoS information.

Step S916: The relay UE sends the second configuration information to the first remote UE, in which the second configuration information carries the third relay UE QoS information; and/or the relay UE sends the third configuration information to the first remote UE, in which the third configuration information carries at least one third remote UE QoS information.

Step S917: In response to receiving the second configuration information, the first remote UE determines the third remote UE QoS information corresponding to the third relay UE QoS information based on the third relay UE QoS information carried in the second configuration information.

Step S918: In response to receiving the third configuration information, the first remote UE determines one third remote UE QoS information as the fourth remote UE QoS information for determining the transmission resources based on at least one third remote UE QoS carried in the third configuration information.

Step S919: The first remote UE determines the fourth relay UE QoS information corresponding to the fourth remote UE QoS information based on the fourth remote UE QoS information; and sends the fourth confirmation information to the relay UE, in which the fourth confirmation information is used to indicate that the relay UE determines the transmission resources based on the fourth relay UE QoS information.

It should be noted that those skilled in the art can understand that the method provided in the embodiments of the present disclosure can be executed alone or together with some methods in the embodiments of the present disclosure or some methods in related technologies.

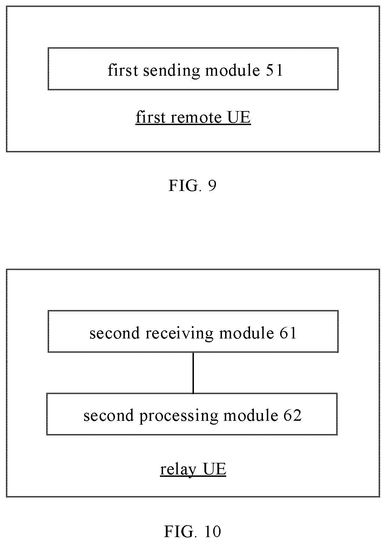

As shown in FIG. 9, an embodiment of the present disclosure provides a QoS information processing device, which is applied to a first remote UE, and includes a first sending module 51.

The first sending module 51 is configured to send first configuration information, in which the first configuration information is used for the relay UE to determine the remote UE QoS information and/or the relay UE QoS information in the first connection.

In some embodiments, the first configuration information is used to indicate at least one of the following:
SL QoS information of the first connection;
at least one remote UE QoS information and/or at least one relay UE QoS information.

In some embodiments, the first connection is the SL between the first remote UE and the second remote UE; in which different first connections correspond to different SL QoS information.

An embodiment of the present disclosure provides a QoS information processing device, which is applied to a first remote UE, and includes a first sending module 51.

The first sending module 51 is configured to send the first configuration information based on the SL RRC message.

In addition or alternatively, the first sending module 51 is configured to send the first configuration information based on the SL MAC CE signaling.

In some embodiments, the QoS information includes: PDB.

An embodiment of the present disclosure provides a QoS information processing device, which is applied to a first remote UE, and includes a first processing module.

The first processing module is configured to determine at least one remote UE QoS information and/or at least one relay UE QoS information based on SL QoS information.

Alternatively, the first processing module is configured to determine at least one remote UE QoS information and relay UE QoS information corresponding to the remote UE QoS information based on SL QoS information.

In some embodiments, the first configuration information is used to indicate one first relay UE QoS information in the relay UE QoS information.

Embodiment of the present disclosure provide a QoS information processing device, which is applied to a first remote UE and includes: a first processing module, configured to determine, in response to receiving first confirmation information, transmission resources based on the first remote UE QoS information corresponding to the first relay UE QoS information; in which the first confirmation information is used to indicate that the relay UE determines the transmission resources based on the first relay UE QoS information.

Embodiments of the present disclosure provide a QoS information processing device, which is applied to a first remote UE, and includes: a first processing module, configured to determine that the first connection fails in response to receiving first rejection information; in which the first rejection information is used to indicate that the transmission resources of the relay UE cannot meet the first relay UE QoS information.

In some embodiments, the first configuration information is used to indicate at least two first relay UE QoS information in the relay UE QoS information.

The at least two first relay UE QoS are used for the relay UE to determine a first relay UE QoS as a second relay UE QoS for determining the transmission resources.

Embodiments of the present disclosure provide a QoS information processing device, which is applied to a first remote UE, and includes: a first processing module, configured to determine the transmission resources based on the second remote UE QoS information corresponding to the second relay UE QoS information in response to receiving second confirmation information; in which the second confirmation information is used to indicate that the relay UE determines the transmission resources based on the second relay UE QoS information.

An embodiment of the present disclosure provides a QoS information processing device, which is applied to a first remote UE, and includes: a first processing module, configured to determine that the first connection fails in response to receiving second rejection information; in which the second rejection information is used to indicate that the transmission resources of the relay UE cannot meet any of the first relay UE QoS information.

In some embodiments, the first configuration information is used to indicate the SL QoS information of the first connection.

The device includes a first receiving module and a first processing module.

The first receiving module is configured to receive the second configuration information, in which the second configuration information carries the third relay UE QoS information.

The first processing module is configured to determine the third remote UE QoS information corresponding to the third UE QoS information based on the third relay UE QoS information.

An embodiment of the present disclosure provides a QoS information processing device, which is applied to a first remote UE, and includes a first receiving module and a first processing module.

The first receiving module is configured to receive the second configuration information, in which the second configuration information carries the third relay UE QoS information.

The first processing module is configured to determine the third remote UE QoS information corresponding to the third UE QoS information based on the third relay UE QoS information.

An embodiment of the present disclosure provides a QoS information processing device, which is applied to a first remote UE, and includes: a first sending module 51, configured to send third confirmation information, in which the third confirmation information is used to indicate that the first remote UE determines the transmission resources based on the third remote UE QoS information.

In some embodiments, the first configuration information is used to indicate the SL QoS information of the first connection.

The device includes a first receiving module and a first processing module.

The first receiving module is configured to receive the third configuration information, in which the third configuration information carries at least one third remote UE QoS information.

The first processing module is configured to select one third remote UE QoS information from at least one third remote UE QoS information as the fourth remote UE QoS information for determining the transmission resources.

An embodiment of the present disclosure provides a QoS information processing device, which is applied to a first remote UE, and includes a first receiving module and a first processing module.

The first receiving module is configured to receive the third configuration information, in which the third configuration information carries at least one third remote UE QoS information.

The first processing module is configured to select one third remote UE QoS information from at least one third remote UE QoS information as the fourth remote UE QoS information for determining the transmission resources.

An embodiment of the present disclosure provides a QoS information processing device, which is applied to a first remote UE, and includes a first processing module and a first sending module.

The first processing module is configured to determine fourth relay UE QoS information corresponding to fourth remote UE QoS information.

The first sending module 51 is configured to send fourth confirmation information, in which the fourth confirmation information is used to indicate that the relay UE determines the transmission resources based on the fourth relay UE QoS information.

In some embodiments, determining the transmission resources includes at least one of the following:
selecting the transmission resources;
adjusting a transmission power; or
determining a priority of the transmission resources.

As shown in FIG. 10, an embodiment of the present disclosure provides a QoS information processing device, which is applied to a relay UE, and includes a second receiving module 61 and a second processing module 62.

The second receiving module 61 is configured to receive first configuration information.

The second processing module 62 is configured to determine the remote UE QoS information and/or the relay UE QoS information in the first connection based on the first configuration information.

In some embodiments, the first configuration information is used to indicate at least one of the following:
SL QoS information of the first connection;
at least one remote UE QoS information and/or at least one relay UE QoS information.

In some embodiments, the first connection is a SL between a first remote UE and a second remote UE; in which different first connections correspond to different SL QoS information.

An embodiment of the present disclosure provides a QoS information processing device, which is applied to a relay UE, and includes a second receiving module 61.

The second receiving module 61 is configured to receive first configuration information sent based on an SL RRC message.

The second receiving module 61 is configured to receive first configuration information sent based on SL MAC CE signaling.

In some embodiments, QoS information includes: PDB.

An embodiment of the present disclosure provides a QoS information processing device, applied to a relay UE, and includes: a second sending module, configured to send first confirmation information in response to the first configuration information indicating one first relay UE QoS information in the relay UE QoS information; in which the first confirmation information is used to indicate that the relay UE determines the transmission resources based on the first relay UE QoS information.

An embodiment of the present disclosure provides a QoS information processing device, which is applied to a relay UE, and includes: a second sending module, configured to send first rejection information in response to the first configuration information indicating one first relay UE QoS information in the relay UE QoS information; in which the first rejection information is used to indicate that the transmission resources of the relay UE cannot meet the first relay UE QoS information.

An embodiment of the present disclosure provides a QoS information processing device, which is applied to the relay UE, and includes: a second processing module 62, configured to determine that the first connection fails in response to sending the first rejection information.

Embodiments of the present disclosure provide a QoS information processing device, which is applied to the relay UE, and includes: a second processing module, configured to determine one first relay UE QoS information as the second relay UE QoS information for determining the transmission resources based on at least two first relay UE QoS information in response to the first configuration information indicating at least two first relay UE QoS information in the relay UE QoS information.

An embodiment of the present disclosure provides a QoS information processing device, which is applied to the relay UE, and includes: a second sending module, configured to send second confirmation information, in which the second confirmation information is used to indicate that the relay UE determines the transmission resources based on the second relay UE QoS.

An embodiment of the present disclosure provides a QoS information processing device, which is applied to a relay UE, and includes: a second sending module, configured to send second rejection information in response to the first configuration information indicating at least two first relay UE QoS information in the relay UE QoS information, in which the second rejection information is used to indicate that the transmission resources of the relay UE cannot meet any one of the first relay UE QoS information.

An embodiment of the present disclosure provides a QoS information processing device, which is applied to a relay UE, and includes: a second processing module 62, configured to determine that the first connection fails in response to sending the second rejection information.

An embodiment of the present disclosure provides a QoS information processing device, which is applied to a relay UE, and includes a second processing module 62.

The second processing module 62 is configured to determine at least one third remote UE QoS information and/or at least one third relay UE QoS information based on the SL QoS information carried in the first configuration information.

Alternatively, the second processing module 62 is configured to determine at least one third remote UE QoS information and third relay UE QoS information corresponding to the third remote UE QoS information based on the SL QoS information.

An embodiment of the present disclosure provides a QoS information processing device, which is applied to a relay UE, and includes: a second sending module, configured to send second configuration information, in which the second configuration information carries third relay UE QoS information.

An embodiment of the present disclosure provides a QoS information processing device, which is applied to a relay UE, and includes: a second receiving module 61, configured to receive third confirmation information, in which the third confirmation information is used to indicate that the first remote UE determines the transmission resources based on the third remote UE QoS information; in which the third remote UE QoS information is determined by the first remote UE based on the third relay UE QoS information.

An embodiment of the present disclosure provides a QoS information processing device, which is applied to a relay UE, and includes: a second sending module, configured to send third configuration information, in which the third configuration information carries at least one third remote UE QoS information.

An embodiment of the present disclosure provides a QoS information processing device, which is applied to a relay UE, and includes: a second receiving module 61, configured to receive fourth confirmation information, in which the fourth confirmation information indicates that the relay UE determines the transmission resources based on the fourth relay UE QoS information; in which the fourth relay QoS information is determined by the first remote UE based on the fourth remote UE QoS information; the fourth remote UE QoS information is determined by the first remote UE by selecting one third remote UE QoS information from at least one third remote UE QoS information.

In some embodiments, the fourth confirmation information is also used to indicate that the first remote UE determines the transmission resources based on the fourth remote UE QoS information.

In some embodiments, determining the transmission resources includes at least one of the following:
selecting the transmission resources;
adjusting a sending power; or
determining a priority of the transmission resources.

It should be noted that those skilled in the art can understand that the device provided in the embodiments of the present disclosure can be executed alone or together with some devices in the embodiments of the present disclosure or some devices in the related technology.

Regarding the device in the above embodiments, the specific manner in which each module performs the operation has been described in detail in the embodiments of the method, and will not be elaborated here.

The present disclosure provides a communication device, the communication device includes a processor; and a memory for storing processor executable instructions.

The processor is configured to: implement the QoS information processing method of any embodiment of the present disclosure when running the processor executable instructions.

In an embodiment, the communication device may include but is not limited to at least one of: a first remote UE, a second remote UE or a relay UE.

The processor may include various types of storage medium, which are non-transitory computer storage medium, and can continue to store information after the user equipment is powered off.

The processor can be connected to the memory through a bus, etc., for reading an executable program stored on the memory, for example, at least one of the methods shown in FIGS. 2 to 8.

The present disclosure also provides a computer storage medium, which stores a computer executable program, and the computer executable program is executed by the processor to implements the QoS information processing method of any embodiment of the present disclosure, for example, at least one of the methods shown in FIGS. 2 to 8.

Regarding the device or storage medium in the above embodiments, the specific manner in which each module performs the operation has been described in detail in the embodiments of the method, and will not be repeated here.

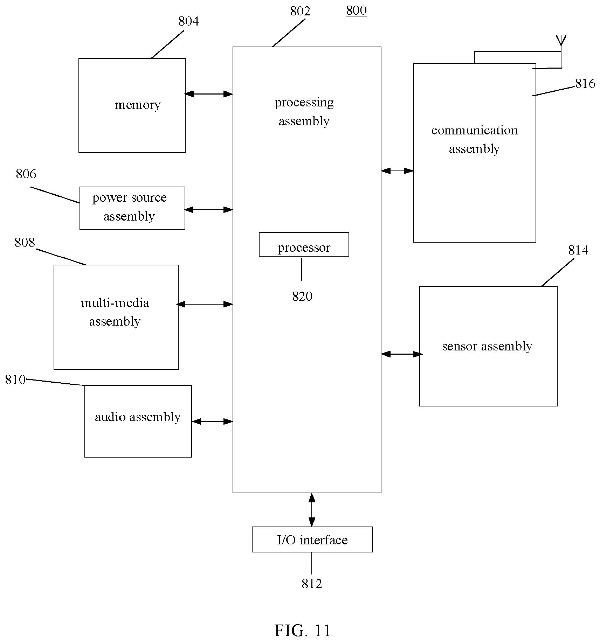

FIG. 11 is a block diagram of a user device 800 according to an exemplary embodiment. For example, the user device 800 may be a mobile phone, a computer, a digital broadcast user device, a messaging device, a game console, a tablet device, a medical device, a fitness device, a personal digital assistant, etc.

Referring to FIG. 11, the user device 800 may include one or more of the following components: a processing component 802, a memory 804, a power component 806, a multimedia component 808, an audio component 810, an input/output (I/O) interface 812, a sensor component 814, and a communication component 816.

The processing component 802 generally controls the overall operation of the user device 800, such as operations associated with display, phone calls, data communications, camera operations, and recording operations. The processing component 802 may include one or more processors 820 to execute instructions to implement all or part of the steps of the above method. In addition, the processing component 802 may include one or more modules to facilitate interaction between the processing component 802 and other components. For example, the processing component 802 may include a multimedia module to facilitate interaction between the multimedia component 808 and the processing component 802.

The memory 804 is configured to store various types of data to support the operation of the user device 800. Examples of such data include instructions for any application or method operating on the user device 800, contact data, phone book data, messages, pictures, videos, etc. The memory 804 can be implemented by any type of volatile or non-volatile storage device or a combination thereof, such as static random access memory (SRAM), electrically erasable programmable read-only memory (EEPROM), erasable programmable read-only memory (EPROM), programmable read-only memory (PROM), read-only memory (ROM), magnetic memory, flash memory, magnetic disk or optical disk.

The power supply component 806 provides power to various components of the user device 800. The power supply component 806 may include a power management system, one or more power supplies, and other components associated with generating, managing and distributing power for the user device 800.

The multimedia component 808 includes a screen that provides an output interface between the user device 800 and the user. In some embodiments, the screen may include a liquid crystal display (LCD) and a touch panel (TP). If the screen includes a touch panel, the screen may be implemented as a touch screen to receive input signals from the user. The touch panel includes one or more touch sensors to sense touch, slide, and gestures on the touch panel. The touch sensor can sense not only the boundary of the touch or slide action, but also the duration and pressure associated with the touch or slide operation. In some embodiments, the multimedia component 808 includes a front camera and/or a rear camera. When the user device 800 is in an operating mode, such as a shooting mode or a video mode, the front camera and/or the rear camera can receive external multimedia data. Each front camera and rear camera can be a fixed optical lens system or have focal length and optical zoom capabilities.

The audio component 810 is configured to output and/or input audio signals. For example, the audio component 810 includes a microphone (MIC), and when the user device 800 is in an operating mode, such as a call mode, a recording mode, and a voice recognition mode, the microphone is configured to receive an external audio signal. The received audio signal can be further stored in the memory 804 or sent via the communication component 816. In some embodiments, the audio component 810 also includes a speaker for outputting audio signals.

The I/O interface 812 provides an interface between the processing component 802 and the peripheral interface module, which may be a keyboard, a click wheel, buttons, etc. These buttons may include, but are not limited to, a home button, a volume button, a start button, and a lock button.

The sensor component 814 includes one or more sensors for providing various aspects of status assessment for the user device 800. For example, the sensor component 814 can detect the on/off state of the user device 800, the relative positioning of components, such as the display and keypad of the user device 800, the sensor component 814 can also detect the position change of the user device 800 or a component of the user device 800, the presence or absence of contact between the user and the user device 800, the orientation or acceleration/deceleration of the user device 800, and the temperature change of the user device 800. The sensor component 814 may include a proximity sensor configured to detect the presence of nearby objects without any physical contact. The sensor component 814 may also include a light sensor, such as a CMOS or CCD image sensor, for use in imaging applications. In some embodiments, the sensor component 814 may also include an acceleration sensor, a gyroscope sensor, a magnetic sensor, a pressure sensor, or a temperature sensor.

The communication component 816 is configured to facilitate wired or wireless communication between the user device 800 and other devices. The user device 800 can access a wireless network based on a communication standard, such as WiFi, 4G or 5G, or a combination thereof. In an exemplary embodiment, the communication component 816 receives a broadcast signal or broadcast-related information from an external broadcast management system via a broadcast channel. In an exemplary embodiment, the communication component 816 also includes a near field communication (NFC) module to facilitate short-range communication. For example, the NFC module can be implemented based on radio frequency identification (RFID) technology, infrared data association (IrDA) technology, ultra-wideband (UWB) technology, Bluetooth (BT) technology and other technologies.

In an exemplary embodiment, the user device 800 can be implemented by one or more application-specific integrated circuits (ASICs), digital signal processors (DSPs), digital signal processing devices (DSPDs), programmable logic devices (PLDs), field programmable gate arrays (FPGAs), controllers, microcontrollers, microprocessors or other electronic components to perform the above method.

In an exemplary embodiment, a non-transitory computer-readable storage medium including instructions is also provided, such as a memory 804 including instructions, and the instructions can be executed by a processor 820 of the user device 800 to implement the above method. For example, the non-transitory computer-readable storage medium can be a ROM, a random access memory (RAM), a CD-ROM, a tape, a floppy disk, and an optical data storage device, etc.

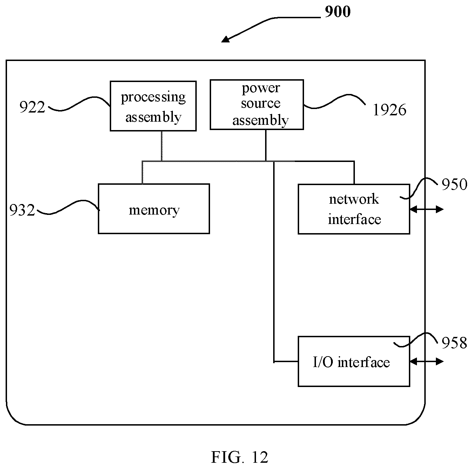

As shown in FIG. 12, an embodiment of the present disclosure shows a structure of a base station. For example, a base station 900 can be provided as a network side device. Referring to FIG. 12, the base station 900 includes a processing component 922, which further includes one or more processors, and a memory resource represented by a memory 932 for storing instructions executable by the processing component 922, such as an application. The application stored in the memory 932 may include one or more modules each corresponding to a set of instructions. In addition, the processing component 922 is configured to execute instructions to execute the above method, and any method previously applied to the base station.

The base station 900 may also include a power supply component 926 configured to perform power management of the base station 900, a wired or wireless network interface 950 configured to connect the base station 900 to a network, and an input/output (I/O) interface 958. The base station 900 may operate based on an operating system stored in the memory 932, such as Windows Server ^{™}, Mac OS X^{™}, Unix^{™}, Linux^{™}, FreeBSD^{™} or the like.

Other embodiments of the present disclosure will be readily apparent to those skilled in the art after considering the specification and practicing the present disclosure. The present disclosure is intended to cover any variation, use or adaptation of the present disclosure that follows the general principles of the present disclosure and includes common knowledge or conventional technical means in the art that are not disclosed in the present disclosure. The description and embodiments are to be regarded as exemplary only, and the true scope and spirit of the present disclosure are indicated by the following claims.

It should be understood that the present disclosure is not limited to the precise structure described above and shown in the accompanying drawings, and various modifications and changes may be made without departing from the scope of the present disclosure, which is only limited by the appended claims.

## Claims

1. A quality of service (QoS) information processing method, performed by a first remote user equipment (UE), comprising:
sending first configuration information, wherein the first configuration information is configured for a relay UE to determine remote UE QoS information and/or relay UE QoS information in a first connection.

2. The QoS information processing method according to claim 1, wherein the first configuration information is configured to indicate at least one of:
sidelink QoS information of the first connection; or
at least one remote UE QoS information and/or at least one relay UE QoS information.

3. The QoS information processing method according to claim 2, wherein the first connection is a sidelink between the first remote UE and a second remote UE; wherein different first connections correspond to different sidelink QoS information.

4. The QoS information processing method according to claim 1, wherein sending the first configuration information comprises at least one of:
sending the first configuration information based on a sidelink radio resource control (RRC) message; or
sending the first configuration information based on a sidelink media access control control element (MAC CE) signaling.

5. The QoS information processing method according to claim 1, wherein the QoS information comprises a packet delay budget (PDB).

6. The QoS information processing method according to any one of claims 2 to 4, further comprising:
determining at least one remote UE QoS information and/or at least one relay UE QoS information based on the sidelink QoS information;
or,
determining at least one remote UE QoS information and the relay UE QoS information corresponding to the at least one remote UE QoS information based on the sidelink QoS information.

7. The QoS information processing method according to claim 6, wherein the first configuration information is used to indicate one first relay UE QoS information in the relay UE QoS information.

8. The QoS information processing method according to claim 7, further comprising:
determining transmission resources based on the first remote UE QoS information corresponding to the first relay UE QoS information, in response to receiving a first confirmation message;
wherein the first confirmation message is configured to indicate that relay UE determines the transmission resources based on the first relay UE QoS information.

9. The QoS information processing method according to claim 7, further comprising:
in response to receiving a first rejection message, determining that the first connection fails; wherein the first rejection message is used to indicate that the transmission resources of the relay UE do not meet the first relay UE QoS information.

10. The QoS information processing method according to claim 5, wherein the first configuration information is configured to indicate at least two first relay UE QoS information in the relay UE QoS information;
the at least two first relay UE QoS are configured for the relay UE to determine one first relay UE QoS as second relay UE QoS for determining the transmission resources.

11. The QoS information processing method according to claim 10, further comprising:
determining the transmission resources based on the second remote UE QoS information corresponding to the second relay UE QoS information, in response to receiving second confirmation information;
wherein the second confirmation information is configured to indicate that the relay UE determines the transmission resources based on the second relay UE QoS information.

12. The QoS information processing method according to claim 10, further comprising:
in response to receiving second rejection information, determining that the first connection fails; wherein the second rejection information is used to indicate that the transmission resources of the relay UE do not meet any of the first relay UE QoS information.

13. The QoS information processing method according to any one of claims 2 to 4, wherein the first configuration information is configured to indicate the sidelink QoS information of the first connection;
the QoS information processing method further comprises:
receiving second configuration information, wherein the second configuration information comprises third relay UE QoS information;
determining third remote UE QoS information corresponding to third UE QoS information based on the third relay UE QoS information.

14. The QoS information processing method according to claim 13, further comprising:
sending third confirmation information, wherein the third confirmation information is configured to indicate that the first remote UE determines the transmission resources based on the third remote UE QoS information.

15. The QoS information processing method according to any one of claims 2 to 4, wherein the first configuration information is configured to indicate the sidelink QoS information of the first connection;
the QoS information processing method further comprises:
receiving third configuration information, wherein the third configuration information comprises at least one third remote UE QoS information;
selecting one third remote UE QoS information from the at least one third remote UE QoS information as fourth remote UE QoS information for determining the transmission resources.

16. The QoS information processing method according to claim 15, further comprising:
determining fourth relay UE QoS information corresponding to the fourth remote UE QoS information;
sending fourth confirmation information, wherein the fourth confirmation information is configured to indicate that the relay UE determines the transmission resources based on the fourth relay UE QoS information.

17. The QoS information processing method according to any one of claims 8, 10, 11, 14 or 16, wherein determining the transmission resources comprises at least one of:
selecting the transmission resources;
adjusting a transmission power; or
determining a priority of the transmission resources.

18. A quality of service (QoS) information processing method, performed by a relay user equipment (UE), comprising:
receiving first configuration information;
determining remote UE QoS information and/or relay UE QoS information in a first connection based on the first configuration information.

19. The QoS information processing method according to claim 18, wherein the first configuration information is configured to indicate at least one of:
sidelink QoS information of the first connection; or
at least one remote UE QoS information and/or at least one relay UE QoS information.

20. The QoS information processing method according to claim 19, wherein the first connection is a sidelink between a first remote UE and a second remote UE; different first connections correspond to different sidelink QoS information.

21. The QoS information processing method according to claim 18, wherein receiving the first configuration information comprises at least one of:
receiving the first configuration information sent based on a sidelink radio resource control (RRC) message;
receiving the first configuration information sent based on a sidelink media access control control element (MAC CE) signaling.

22. The QoS information processing method according to claim 18, wherein the QoS information comprises a PDB.

23. The QoS information processing method according to any one of claims 19 to 22, further comprising:
sending first confirmation information, in response to the first configuration information indicating one first relay UE QoS information in the relay UE QoS information; wherein the first confirmation information is configured to indicate that the relay UE determines the transmission resources based on the first relay UE QoS information.

24. The QoS information processing method according to any one of claims 19 to 22, further comprising:
in response to the first configuration information indicating one first relay UE QoS information in the relay UE QoS information, sending first rejection information; wherein the first rejection information is used to indicate that the transmission resources of the relay UE do not meet the first relay UE QoS information.

25. The QoS information processing method according to claim 24, further comprising:
in response to sending the first rejection information, determining that the first connection fails.

26. The QoS information processing method according to any one of claims 19 to 22, further comprising:
in response to the first configuration information indicating at least two first relay UE QoS information in the relay UE QoS information, determining one of the at least two first relay UE QoS information as second relay UE QoS information for determining the transmission resources based on the at least two first relay UE QoS information.

27. The QoS information processing method according to claim 26, further comprising:
sending second confirmation information, wherein the second confirmation information is used to indicate that the relay UE determines the transmission resources based on the second relay UE QoS.

28. The QoS information processing method according to any one of claims 19 to 22, further comprising:
in response to the first configuration information indicating at least two first relay UE QoS information in the relay UE QoS information, sending second rejection information, wherein the second rejection information is used to indicate that the transmission resources of the relay UE do not meet any of the first relay UE QoS information.

29. The QoS information processing method according to claim 28, further comprising:
in response to sending the second rejection information, determining that the first connection fails.

30. The QoS information processing method according to any one of claims 19 to 22, wherein determining the remote UE QoS information and/or the relay UE QoS information in the first connection based on the first configuration information comprises:
determining at least one third remote UE QoS information and/or at least one third relay UE QoS information based on the sidelink QoS information comprises in the first configuration information;
or,
determining at least one third remote UE QoS information and the third relay UE QoS information corresponding to the at least one third remote UE QoS information based on the sidelink QoS information.

31. The QoS information processing method according to claim 30, further comprising:
sending second configuration information, wherein the second configuration information carries the third relay UE QoS information.

32. The QoS information processing method according to claim 31, further comprising:
receiving third confirmation information, wherein the third confirmation information is used to indicate that the first remote UE determines the transmission resources based on the third remote UE QoS information; the third remote UE QoS information is determined by the first remote UE based on the third relay UE QoS information.

33. The QoS information processing method according to claim 30, further comprising:
sending third configuration information, wherein the third configuration information carries at least one third remote UE QoS information.

34. The QoS information processing method according to claim 33, further comprising:
receiving fourth confirmation information, wherein the fourth confirmation information indicates that the relay UE determines the transmission resources based on fourth relay UE QoS information; the fourth relay QoS information is determined by the first remote UE based on fourth remote UE QoS information; the fourth remote UE QoS information is determined by the first remote UE by selecting one third remote UE QoS information from the at least one third remote UE QoS information.

35. The QoS information processing method according to claim 34, wherein the fourth confirmation information is further used to indicate that the first remote UE determines the transmission resources based on the fourth remote UE QoS information.

36. The QoS information processing method according to claim 23, wherein determining the transmission resources comprises at least one of:
selecting the transmission resources;
adjusting a transmission power; or
determining a priority of the transmission resources.

37. A QoS information processing device, applied to a first remote UE, comprising:
a first sending module, configured to send first configuration information, wherein the first configuration information is used for a relay UE to determine remote UE QoS information and/or relay UE QoS information in a first connection.

38. A QoS information processing device, applied to a relay UE, comprising:
a second receiving module, configured to receive first configuration information;
a second processing module, configured to determine remote UE QoS information and/or relay UE QoS information in a first connection based on the first configuration information.

39. A communication device, comprising:
a processor; and
a memory for storing executable instructions of the processor;
wherein the processor is configured to execute the executable instructions to implement the QoS information processing method according to any one of claims 1 to 17 or claims 18 to 36.

40. A computer storage medium, wherein the computer storage medium stores a computer executable program, and the computer executable program, when executed by a processor, implements the QoS information processing method according to any one of claims 1 to 17 or claims 18 to 36.
